# EUROPÄISCHE PATENTSCHRIFT

(11) **EP 3 626 082 B1**
(45) Veröffentlichungstag und Bekanntmachung des Hinweises auf die Patenterteilung: **09.06.2021**
(21) Anmeldenummer: 19192608.8
(22) Anmeldetag: 20.08.2019
(51) Int. Cl.: A23N 1/00, A23N 1/02

(54) **FRUCHTPRESSE FÜR ZITRUSFRÜCHTE**
FRUIT PRESS FOR CITRUS FRUITS
PRESSE AGRUMES

(30) Priorität: 20.09.2018 AT 508062018
(43) Veröffentlichungstag der Anmeldung: 25.03.2020
(73) Patentinhaber: Citrocasa GmbH, 4020 Linz (AT)
(72) Erfinder: Edtmayr, Johannes, 4731 Prambachkirchen (AT); Huber, Johannes, 4225 Luftenberg (AT)
(74) Vertreter: Hübscher & Partner Patentanwälte GmbH

(56) Entgegenhaltungen:
- WO-A1-2015/024034
- WO-A1-2016/015076
- DE-T2- 69 315 802
- GB-A- 613 243
- US-A- 5 188 021

## Beschreibung

Die Erfindung bezieht sich auf eine Fruchtpresse für Zitrusfrüchte mit einem einen Presshub ausführenden Pressenkopf, der zwei beidseits eines Messers angeordnete, über parallele Wellen zwischen einer oberen Aufnahmestellung und einer unteren Pressstellung gegensinnig verschwenkbare Aufnahmematrizen für je eine Fruchthälfte sowie zwei beidseits des Messers verlaufende, der äußeren Umlaufbahn der Aufnahmematrizen folgende Gleitführungen für die Fruchthälften umfasst, und mit dem Pressenkopf zugeordneten Stempeln, die in der unteren Pressstellung des Pressenkopfs mit den Aufnahmematrizen zusammenwirken.

Bei Fruchtpressen, bei denen die Presswerkzeuge aus feststehenden unteren Stempeln und mit diesen Stempeln zusammenwirkenden Aufnahmematrizen gebildet werden, die zwischen einer oberen Aufnahmestellung für die Früchte und einer unteren Pressstellung verschwenkbar sind (WO 2015/024034 A1), ergeben sich bauliche Vorteile hinsichtlich der Baubreite, weil die Aufnahmematrizen lediglich zwischen der Aufnahmestellung und der Pressstellung gegensinnig hin- und herverschwenkt werden und nicht gegensinnig umlaufen. Beim Abwärtsschwenken der Aufnahmematrizen in die Pressstellung werden die Zitrusfrüchte mit Hilfe eines zwischen den Aufnahmematrizen ortsfest angeordneten Messers halbiert und dann in der unteren Pressstellung durch die in die Aufnahmematrizen eindringen Stempel ausgepresst. Damit die Fruchthälften nicht aus den Aufnahmematrizen austreten können, bevor die Stempel zum Einsatz kommen, sind den Aufnahmematrizen Gleitführungen für die Fruchthälften zugeordnet, die durch die Aufnahmematrizen entlang dieser Gleitführungen mitgenommen werden. In der unteren Pressstellung der Aufnahmematrizen verhindern die Stempel einen Austritt der Fruchthälften aus den Aufnahmematrizen, wenn die Fruchthälften mit der Schnittfläche von den Gleitführungen auf die Stempel gleiten. Dies kann allerdings nur für Zitrusfrüchte sichergestellt werden, die eine an die Aufnahmematrizen angepasste Größe aufweisen. Da beim Presshub die Gleitführungen an den Stempeln vorbeibewegt werden müssen, damit die Stempel in die Aufnahmematrizen eingreifen können, besteht bei kleineren Zitrusfrüchten die Gefahr, dass die Fruchthälften beim Abschieben von den Gleitführungen abkippen, bevor sie von den Stempeln gestützt werden, sodass die Fruchthälften in einer Kipplage gepresst werden, was tunlichst zu vermeiden ist.

Die gleichen Nachteile treten auch bei einer anderen bekannten, auf dem gleichen Funktionsprinzip beruhenden Fruchtpresse auf (DE 693 15 802 T2), bei der die Hälften der geteilten Zitrusfrüchte mithilfe der Aufnahmematrizen entlang einer Gleitrampe zu einer Rampenöffnung geführt werden, durch die die Stempel beim Pressenhub in die Aufnahmematrizen eingreifen können. Bevor die Stempel beim Pressenhub diese Rampenöffnungen verschließen, besteht wiederum die Gefahr, dass die Fruchthälften im Bereich der Rampenöffnungen abkippen und nicht ordnungsgemäß ausgepresst werden können.

GB 613 243 A beschreibt eine alternative Fruchtpresse.

Der Erfindung liegt somit die Aufgabe zugrunde, eine Fruchtpresse der eingangs geschilderten Art so auszugestalten, dass auch bei kleineren Zitrusfrüchten ein ordnungsgemäßes Auspressen gewährleistet werden kann. Ausgehend von einer gattungsgemäßen Fruchtpresse löst die Erfindung die gestellte Aufgabe dadurch, dass die Gleitführungen in den Wirkungsbereich der Stempel vorstehende, biegeelastische Gleitbahnen aufweisen, die beim Presshub durch die Stempel in die Aufnahmematrizen ausbiegbar sind.

Da zufolge dieser Maßnahme der für den Eintritt der Stempel in die Aufnahmematrizen erforderliche Freiraum in den Gleitführungen zumindest teilweise durch die biegeelastischen Gleitbahnen abgedeckt wird, gleiten die Fruchthälften auf ihrer Schnittfläche entlang der die Gleitführungen verlängernden Gleitbahnen in den Wirkungsbereich der Stempel, ohne einer sonst beim Verlassen der Gleitführungen auftretenden Kippgefahr ausgesetzt zu werden. Die mittels der Gleitbahnen unabhängig vom Durchmesser ihrer Schnittflächen in einer für den Presshub günstigen Lage gehaltenen Fruchthälften werden somit durch den Pressenkopf auf die Stempel aufgedrückt, die die Fruchthälften unter Mitnahme der Gleitbahnen in die Matrizenaufnahmen pressen, sodass die sich dabei an die Stempel anlegenden biegeelastischen Gleitbahnen den Pressvorgang nicht behindern, obwohl sie in den Wirkungsbereich der Stempel vorstehen.

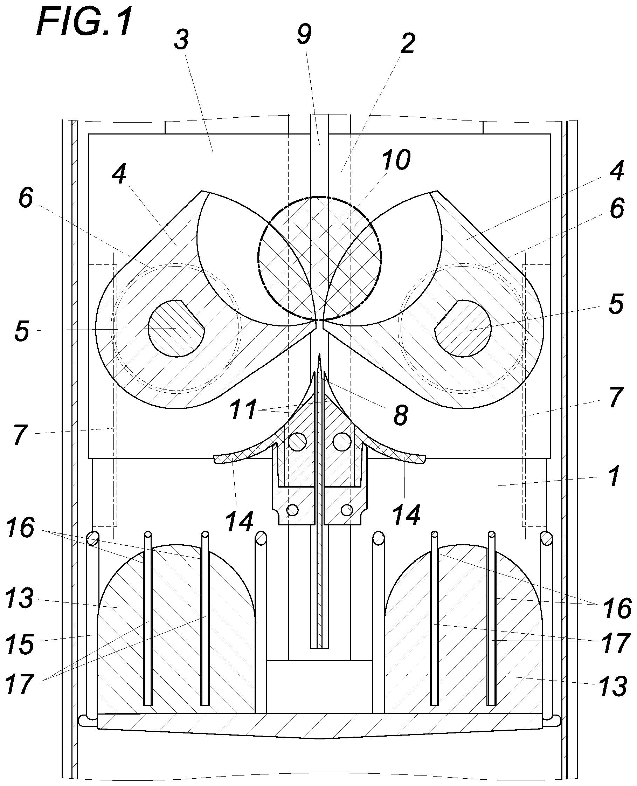

Die biegeelastischen Gleitbahnen sind zwar den Presskräften ausgesetzt, werden allerdings im Wesentlichen durch Druckkräfte belastet, die sie ohne Weiteres aufnahmen können. Trotzdem empfiehlt es sich, diese Gleitbahnen als Verschleißteile austauschbar anzuordnen. Zu diesem Zweck können die Gleitbahnen auswechselbar mit den Gleitführungen verbunden sein, was entsprechende konstruktive Maßnahmen im Bereich der Gleitführungen erfordert. Der damit verbundene Aufwand kann vermieden werden, wenn die mit den Gleitbahnen versehenen Gleitführungen auswechselbar am Pressenkopf angeordnet sind. In der Zeichnung ist der Erfindungsgegenstand beispielsweise dargestellt. Es zeigen die Fig. 1 bis 4 eine erfindungsgemäße Fruchtpresse für Zitrusfrüchte in einem Schnitt senkrecht zu den Wellen der Aufnahmematrizen in der oberen Aufnahmestellung und in der unteren Pressstellung des Pressenkopfs sowie in zwei Zwischenstellungen.

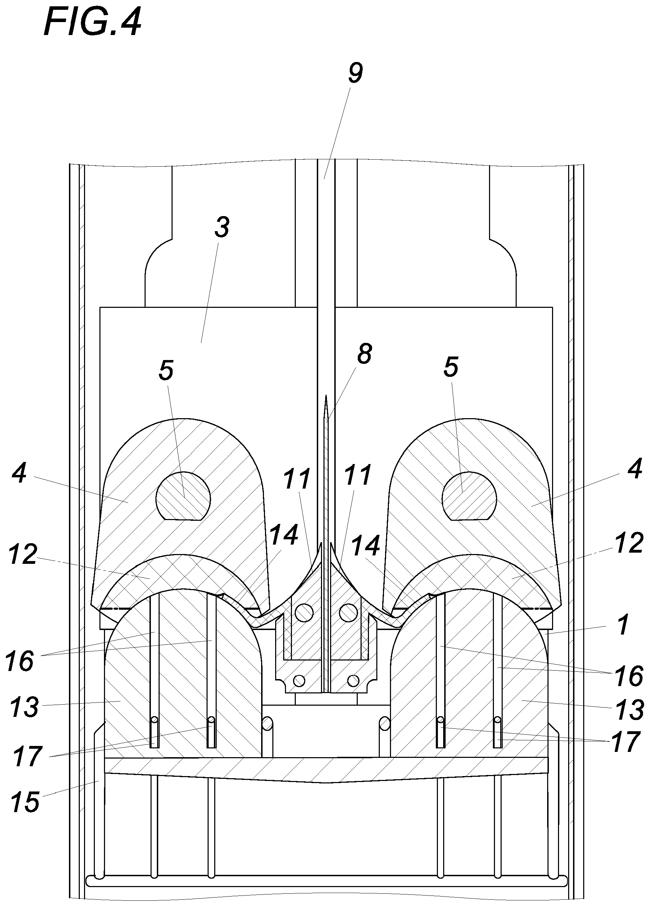

Die dargestellte Fruchtpresse für Zitrusfrüchte weist ein Gestell 1 auf, das eine der Höhe nach verlaufende Führung 2 für einen Pressenkopf 3 bildet. Dieser Pressenkopf 3 wird entlang der Führung 2 mit Hilfe eines Presstriebs angetrieben. Im Pressenkopf 3 sind zwei Aufnahmematrizen 4 auf parallelen Wellen 5 gelagert, die ein Antriebsritzel 6 tragen. Die Antriebsritzel 6 kämmen mit seitlich am Gestell 1 befestigten Zahnstangen 7, sodass bei einer Verlagerung des Pressenkopfs 3 entlang der Führung 2 die auf den Zahnstangen 7 abrollenden Antriebsritzel 6 die Aufnahmematrizen 4 während des Presshubs aus der in der Fig. 1 dargestellten oberen Aufnahmestellung in die untere Pressstellung nach der Fig. 4 und während des Leerhubs von der unteren Pressstellung wieder zurück in die Aufnahmestellung verschwenken.

Zwischen den beiden Aufnahmematrizen 4 ist ein Messer 8 am Gestell 1 befestigt, und zwar mit Hilfe eines den Pressenkopf 3 übergreifenden Messerträgers 9. Damit die Zitrusfrüchte, die über einen Zuführkanal den Aufnahmematrizen 4 zugeführt werden, nach dem Schneiden während der gegensinnigen Abschwenkbewegung der Aufnahmematrizen 4 nicht aus den Aufnahmematrizen 4 schwerkraftbedingt herausgleiten können, sind den Aufnahmematrizen 4 auf dem Pressenkopf 3 Gleitführungen 11 für die Fruchthälften 12 zugeordnet. Diese Gleitführungen 12 bilden zwischen sich eine Führung für das Messer 8.

Unterhalb der Aufnahmematrizen 4 sind im Gestell 1 Stempel 13 vorgesehen, die mit den Aufnahmematrizen 4 in der unteren Pressstellung zusammenwirken, wie dies der Fig. 4 entnommen werden kann. Werden die mit den Fruchthälften 12 beladenen Aufnahmematrizen 4 während des Presshubs des Pressenkopfs 3 auf die Stempel 13 abgesenkt, so werden die Fruchthälften 12 zwischen den Stempeln 13 und den Aufnahmematrizen 4 ausgepresst. Der ausgepresste Saft wird in einem Saftraum gesammelt und kann über einen Absperrhahn entnommen werden.

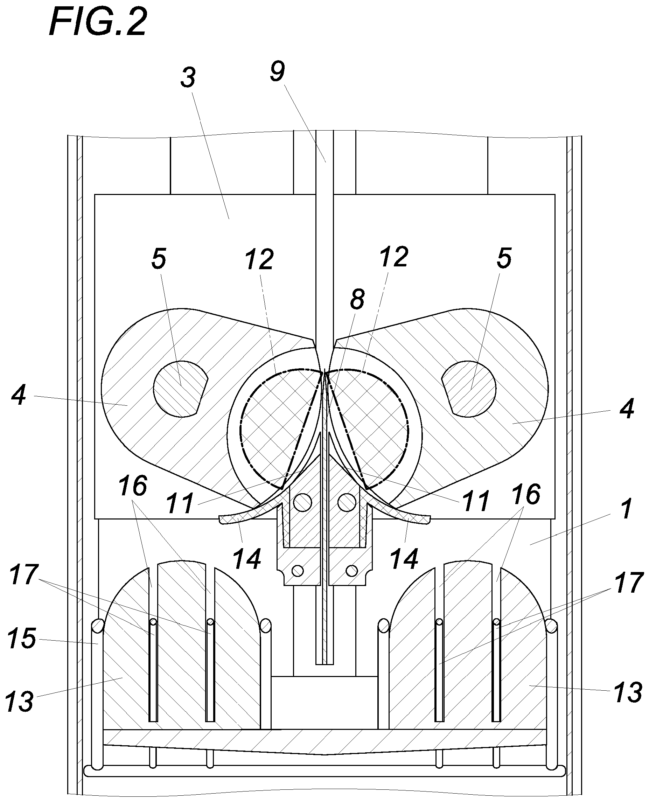

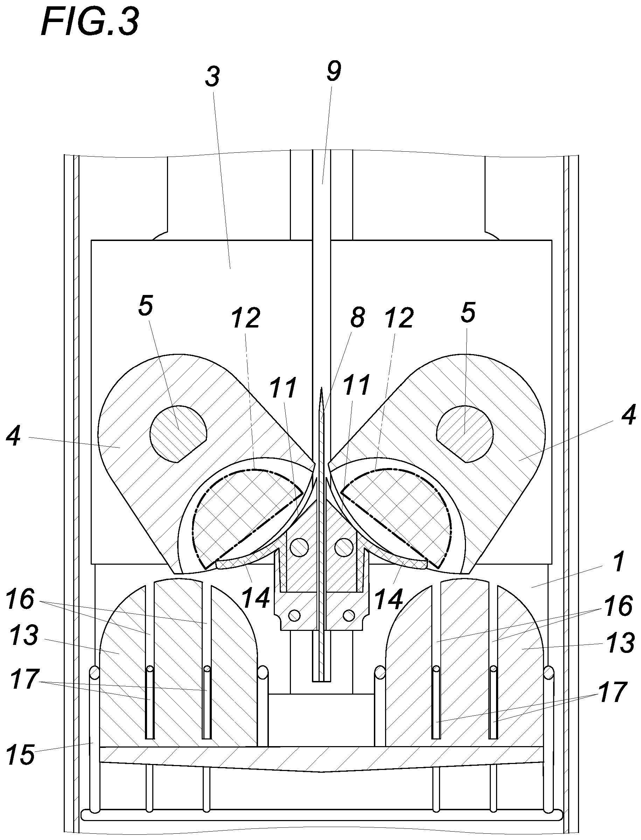

Um die Halbfrüchte 12 in einer für den nachfolgenden Pressvorgang vorteilhaften Stellung mit nach unten gegen die Stempel 13 weisenden Schnittfläche zu halten, sind die Gleitführungen 11 mit in den Wirkungsbereich der Stempel 13 vorstehenden, biegeelastischen Gleitbahnen 14 versehen. Wie sich aus den Zwischenstellungen nach den Fig. 2 und 3 entnehmen lässt, besteht bei Gleitführungen 11 ohne die sie verlängernden Gleitbahnen 14 die Gefahr, dass bei Zitrusfrüchten 10 mit einem kleineren Durchmesser die Halbfrüchte 12 in den für das Vorbeibewegen der Gleitführungen an den Stempeln 13 erforderlichen Freiraum abkippen, bevor sich die Halbfrüchte 12 mit ihren Schnittfläche auf den Stempeln 13 abstützen können, sodass die Halbfrüchte 12 nicht von den Stempeln 13 im Bereich der Schnittfläche, sondern im Schalenbereich erfasst werden, was zu vermeiden ist. Die Gleitbahnen 14 verlängern die Führung der Fruchthälften 12 auf ihren Schnittflächen bis in den Wirkungsbereich der Stempel 13, sodass die Halbfrüchte 12 mit ihren Schnittfläche auf den Stempeln 13 zu liegen kommen und daher ordnungsgemäß mit den Schalen voran in die Aufnahmematrizen 4 gepresst werden.

Voraussetzung ist allerdings, dass die in den Wirkungsbereich der Stempel 13 vorstehenden Gleitbahnen 14 den Pressvorgang nicht behindern. Dies gelingt in einfacher weise dadurch, dass die Gleitbahnen 14 biegeelastisch ausgebildet sind und durch die Stempel 13 in die Aufnahmematrizen 4 ausgebogen werden, wie dies der Fig. 4 entnommen werden kann. Die biegeelastischen Gleitbahnen 14 werden dabei durch die Presskräfte auf Druck belastet, sodass allenfalls mit einer Verschleißbeanspruchung zu rechnen ist, die ein Auswechseln der biegeelastischen Gleitbahnen 14 erforderlich macht. Zu diesem Zweck können die Gleitbahnen 14 entweder lösbar mit den Gleitführungen 11 verbunden sein oder entsprechend dem Ausführungsbeispiel zusammen mit den Gleitführungen 11 auswechselbar gehalten werden.

Um die ausgepressten Halbfrüchte 12 von den Stempeln 13 abheben und in einen Sammelbehälter austragen zu können, ist eine Austragseinrichtung vorgesehen, die gemäß dem dargestellten Ausführungsbeispiel aus einem Austragskamm 15 gebildet wird. Die Stempel 13 sind mit in Richtung der Wellen 5 der Aufnahmematrizen 4 ausgerichteten Nuten 16 zur Aufnahme der Finger 17 des Austragskamms 15 versehen, der um eine Anlenkachse am Pressenkopf 3 angelenkt ist. Da die Anlenkung des Austragskamms 15 auf der dem Benützer zugekehrten Vorderseite der Gleitführungen 11 vorgesehen ist, fällt der Austragskamm 15 in der angehobenen, anschlagbegrenzten Austragsstellung gemäß der Fig. 1 unterhalb der Gleitbahnen 14 nach hinten zu einer in den Sammelbehälter mündenden Austragsöffnung ab. Beim Absenken des Pressenkopfs 3 in die Pressstellung schlägt der Austragskamm 15 an einen gestellfesten Gleitanschlag an und wird dadurch beim weiteren Absenken des Pressenkopfs 3 um seine obere Anlenkachse nach oben verschwenkt, wodurch Bauhöhe gespart wird. In der abgesenkten Pressstellung nach der Fig. 4 sind die Finger 17 des Austragskamms 15 in den Nuten 16 der Stempel 13 versenkt, sodass das Auspressen der Fruchthälften 12 durch die Austragseinrichtung nicht behindert wird. Wird nach dem Presshub der Pressenkopf 3 in einem Leerhub angehoben, so wird der Austragskamm 15 zunächst unter Mitnahme der auf den Stempeln 13 verbleibenden Schalenhälften in die anschlagbegrenzte Schwenklage der Austragsstellung verschwenkt und über den Stempel 13 angehoben, sodass die Halbschalen entlang der abfallenden Finger 17 in den Sammelbehälter fallen.

## Patentansprüche

1. Fruchtpresse für Zitrusfrüchte mit einem einen Presshub ausführenden Pressenkopf (3), der zwei beidseits eines Messers (8) angeordnete, über parallele Wellen (5) zwischen einer oberen Aufnahmestellung und einer unteren Pressstellung gegensinnig verschwenkbare Aufnahmematrizen (4) für je eine Fruchthälfte (12) sowie zwei beidseits des Messers (8) verlaufende, der äußeren Umlaufbahn der Aufnahmematrizen (4) folgende Gleitführungen (11) für die Fruchthälften (12) umfasst, und mit dem Pressenkopf (3) zugeordneten Stempeln (13), die in der unteren Pressstellung des Pressenkopfs (3) mit den Aufnahmematrizen (4) zusammenwirken, **dadurch gekennzeichnet, dass** die Gleitführungen (11) in den Wirkungsbereich der Stempel (13) vorstehende, biegeelastische Gleitbahnen (14) aufweisen, die beim Presshub durch die Stempel (13) in die Aufnahmematrizen (4) ausbiegbar sind.

2. Fruchtpresse nach Anspruch 1, **dadurch gekennzeichnet, dass** die Gleitbahnen (14) auswechselbar mit den Gleitführungen (11) verbunden sind.

3. Fruchtpresse nach Anspruch 1, **dadurch gekennzeichnet, dass** die mit den Gleitbahnen (14) versehenen Gleitführungen (11) auswechselbar am Pressenkopf (3) angeordnet sind.

## Claims

1. Fruit press for citrus fruit, having a press head (3) which performs a press stroke and comprises two receiving dies (4) which are arranged on both sides of a blade (8) and can be pivoted in opposite directions via parallel shafts (5) between an upper receiving position and a lower pressing position, each die being intended for half (12) of a piece of fruit, and comprises two slide guides (11), for the fruit halves (12), extending on both sides of the blade (8) and following the outer circumferential path of the receiving dies (4), and the fruit press having stamps (13) which are allocated to the press head (3) and cooperate with the receiving dies (4) in the lower pressing position of the press head (3), **characterised in that** the slide guides (11) comprise bending-elastic slide tracks (14) protruding into the effective range of the stamps (13), which tracks can be bent out by the stamps (13) into the receiving dies (4) during the press stroke.

2. Fruit press as claimed in claim 1, **characterised in that** the slide tracks (14) are replaceably connected to the slide guides (11).

3. Fruit press as claimed in claim 1, **characterised in that** the slide guides (11) provided with the slide tracks (14) are replaceably arranged on the press head (3).

## Revendications

1. Presse-fruits pour agrumes avec une tête de pressage (3) exécutant une course de pressage qui comprend deux matrices de réception (4) disposées de part et d'autre d'un couteau (8), pivotant en sens opposés par le biais d'arbres parallèles (5) entre une position supérieure de réception et une position inférieure de pressage, destinées chacune à une moitié de fruit (12), ainsi que deux guides coulissants (11) courant de part et d'autre du couteau (8) suivant l'orbite extérieure des matrices de réception (4) pour les moitiés de fruit (12), et avec des tampons (13) associés à la tête de pressage (3) qui coopèrent avec les matrices de réception (4) dans la position inférieure de pressage de la tête de pressage (3), **caractérisé en ce que** les guides coulissants (11) présentent dans la zone d'action des tampons (13) des glissières flexibles (14) faisant saillie qui peuvent être recourbées par les tampons (13) dans les matrices de réception (4) lors de la course de pressage.

2. Presse-fruits selon la revendication 1, **caractérisé en ce que** les glissières (14) peuvent être reliées de façon amovible avec les guides coulissants (11).

3. Presse-fruits selon la revendication 1, **caractérisé en ce que** les guides coulissants (11) munis des glissières (14) sont disposés de façon amovible sur la tête de pressage (3).
